# EUROPEAN PATENT APPLICATION

(11) **EP 1 375 865 A2**
(43) Date of publication of application: **02.01.2004**
(21) Application number: 03254021.3
(22) Date of filing: 25.06.2003
(51) Int. Cl.: F02C 3/16, F02K 7/075

(54) **Method and apparatus for generating torque**

(30) Priority: 27.06.2002 US 184241
(71) Applicant: GENERAL ELECTRIC COMPANY, Schenectady, NY 12345 (US)
(72) Inventor: Leyva, Ivett Alejandra, Niskayuna, New York 12309 (US); Robic, Bernard Francois, Niskayuna, New York 12309 (US); Dean, Anthony John, Scotia, New York 12302 (US); Butler, Lawrence, Cincinatti, Ohio 45241 (US)
(74) Representative: Pedder, James Cuthbert

(57) **Abstract**

An apparatus (100) for generating torque, the apparatus (100) comprising: a rotor hub (110) adapted for applying torque to a shaft; and a plurality of pulse detonation engines (120) adapted for impulsively detonating a plurality of fuel/air mixtures to generate thrust forces and applying the thrust forces to the rotor hub (110) to generate the torque.

## Description

The present invention relates generally to the field of motors and specifically to the use of pulse detonation engines to provide torque in a motor.

In a wide variety of applications, gas turbine engines are used as torque sources. Examples of such applications include, but are not limited to, turning alternators for electric power generation, turning pumps for hydraulic power generation, and turning propellers for aircraft propulsion and for helicopter lift and propulsion.

The advent of pulse detonation engines (PDEs) presents numerous opportunities to replace gas turbine engines with motors based on multiple PDEs. In contrast with the gas turbine engine, the simpler design, higher pressure rise, and superior thermodynamic efficiency of the PDE presents an opportunity to reduce prime mover weight, complexity and cost. Additionally, PDE-based motors may supplant other conventional torque sources including, without limitation, electric motors and hydraulic motors.

The opportunities described above are addressed, in one embodiment of the present invention, by an apparatus for generating torque, the apparatus comprising: a rotor hub adapted for applying torque to a shaft; and a plurality of pulse detonation engines adapted for impulsively detonating a plurality of fuel/air mixtures to generate thrust forces and applying the thrust forces to the rotor hub to generate the torque.

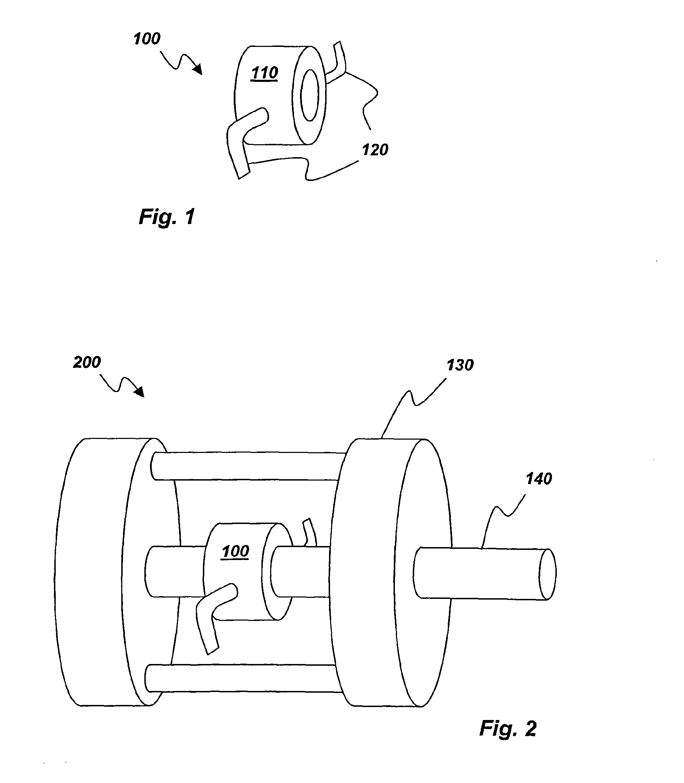

The invention will now be described in greater detail, by way of example, with reference to the drawings, in which:-
Figure 1 illustrates a perspective drawing of an apparatus for generating torque in accordance with one embodiment of the present invention.
Figure 2 illustrates a perspective drawing of a motor in accordance with another embodiment of the present invention.
In accordance with one embodiment of the present invention, Figure 1 illustrates a perspective drawing of an apparatus 100 for generating torque wherein apparatus 100 comprises a rotor hub 110 and a plurality of pulse detonation engines 120. In operation, rotor hub 110 applies torque to a shaft. Pulse detonation engines 120 impulsive detonate a plurality of fuel/air mixtures to generate thrust forces and apply the thrust forces to rotor hub 110 to generate the torque.
As used herein, a "pulse detonation engine" is understood to mean any device or system which produces both a pressure rise and velocity increase from a series of repeating detonations or quasi-detonations within the device. A "quasi-detonation" is a combustion process which produces a pressure rise and velocity increase higher than the pressure rise and velocity increase produced by a deflagration wave. Typical embodiments of PDEs comprise a means of igniting a fuel/air mixture, and a detonation chamber in which pressure wave fronts initiated by the ignition process coalesce to produce a detonation wave. The geometry of the detonation chamber is such that the pressure rise of the detonation wave expels combustion products out the PDE exhaust to produce a thrust force. As used herein, "impulsively detonating" refers to a process of repeating detonations or quasi-detonations wherein each detonation or quasi-detonation is initiated either by external ignition (for example, without limitation, spark discharge or laser pulse) or by gas dynamic processes (for example, without limitation, shock initiation or autoignition).
In accordance with another embodiment of the present invention, Figure 2 illustrates a perspective drawing of a motor 200 comprising a rotor shaft 140 and a stator housing 130. Rotor shaft 140 receives the torque generated by apparatus (100) and provides a means for mechanically coupling to an external load (not shown). Stator housing 130 supports rotor shaft 140. Stator housing 130 typically comprises a bearing set (not shown) comprising, by way of example, but not limitation, journal bearings, roller bearings, ball bearings, needle bearings, gas bearings, and magnetic bearings. Rotor shaft (140) typically comprises at least two means of mechanically coupling: one used for coupling to rotor hub (110), and another used for coupling to the external load. Examples of means of mechanical coupling include, without limitation, knurling, keyways and splines. In some embodiments, rotor hub (110), or the external load, or both are press fit onto rotor shaft (140).
Fuel/air mixtures are delivered to pulse detonation engines 120 through internal passages in rotor hub 110 and in rotor shaft 140. In some embodiments, depending on the space available and on the particular fuel used, detonation occurs in the internal passages. In other embodiments, detonation occurs in structures external to the rotor shaft and to rotor hub 110. Similarly, in some internally aspirated embodiments, air is introduced into the internal passages to form the fuel/air mixture; in other externally aspirated embodiments, the fuel/air mixture is first formed external to the rotor shaft and to rotor hub 110. In some embodiments, a combination of internal and external aspiration is advantageous.

## Claims

1. An apparatus (100) for generating torque, said apparatus (100) comprising:
a rotor hub (110) adapted for applying torque to a shaft; and
a plurality of pulse detonation engines (120) adapted for impulsively detonating a plurality of fuel/air mixtures to generate thrust forces and applying said thrust forces to said rotor hub (110) to generate said torque.

2. The apparatus (100) of claim 1 further comprising a rotor shaft (140) adapted for receiving said torque and providing a means for mechanically coupling to an external load.

3. The apparatus (100) of claim 2 further comprising a stator housing (130) adapted for supporting said rotor shaft (140).

4. A method for generating torque, said method comprising:
impulsively detonating a plurality of fuel/air mixtures in respective ones of a plurality of pulse detonation engines (120) to generate a plurality of thrust forces,
applying said thrust forces to a rotor hub (110) to generate a torque.

5. The method of claim 4 further comprising applying said torque to a rotor shaft (140).

6. The method of claim 5 further comprising supporting said rotor shaft (140) with a stator housing (130).
